Europäisches Patentamt

European Patent Office

Office européen des brevets

(19)

(11) Numéro de publication : **0 021 540**
**B1**

(12) **FASCICULE DE BREVET EUROPÉEN**

(45) Date de publication du fascicule du brevet :
16.02.83

(51) Int. Cl.³ : **B 01 J 8/16**, B 01 D 11/02,
B 01 D 15/00

(21) Numéro de dépôt : 80200595.9

(22) Date de dépôt : 23.06.80

(54) **Procédé de mise en contact d'une phase gazeuse, d'au moins une phase liquide et d'au moins une phase solide à l'état divisé.**

(30) Priorité : 29.06.79 FR 7917430

(43) Date de publication de la demande :
07.01.81 Bulletin 81/01

(45) Mention de la délivrance du brevet :
16.02.83 Bulletin 83/07

(84) Etats contractants désignés :
BE CH DE GB IT LI NL SE

(56) Documents cités :
DE B 1 205 497
FR A 1 444 959
FR A 2 073 685
FR A 2 371 227
GB A 1 379 578
US A 2 567 474
US A 3 241 520

(73) Titulaire : **ANVAR Agence Nationale de Valorisation
de la Recherche
13, rue Madeleine Michelis
F-92522 Neuilly-sur-Seine (FR)**

(72) Inventeur : **Rios, Gilbert
Villa 2 - Les Hauts de Malbosc Rue J. Roumanille
D-34100 Montpellier (FR)**
Inventeur : **Gibert, Henri
Tour Rochambeau Avenue des Etats du Languedoc
F-34000 Montpellier (FR)**
Inventeur : **Baxerres, Jean-Louis Résidence "La
Pinède » Bât. B
2177 Av. du Père Soulas
F-34100 Montpellier (FR)**

(74) Mandataire : **Barre, Philippe
Cabinet Barre-Gatti-Laforgue 93-95 rue des Amidonniers
F-31069 Toulouse Cedex (FR)**

EP 0 021 540 B1

Jouve, 18, rue St-Denis, 75001 Paris, France

# Procédé de mise en contact d'une phase gazeuse, d'au moins une phase liquide et d'au moins une phase solide à l'état divisé

L'invention concerne un procédé de mise en contact d'au moins trois phases, une phase gazeuse, au moins une phase liquide et au moins une phase solide se présentant sous la forme d'un produit solide à l'état divisé. Elle peut être appliquée dans les traitements où il est nécessaire d'assurer un contact intime entre plusieurs phases de nature différente, et notamment pour assurer un transfert de matière entre au moins deux des phases (adsorption d'une partie de la phase gazeuse ou de la phase liquide sur la phase solide, absorption d'une partie de la phase gazeuse dans la phase liquide, extraction au moyen d'un solvant formant la phase liquide de solutés présents sur la phase solide, extraction au moyen d'un solvant liquide de solutés présents dans une phase liquide inerte, ...), ou encore pour assurer une réaction notamment biochimique faisant intervenir au moins deux phases (fermentation aérobie, ou anaérobie de particules solides en milieu liquide, fermentation d'une phase liquide au moyen d'un gaz, ...).

Il est fréquent, notamment dans le secteur agroalimentaire, d'avoir à assurer, lors d'un traitement, une mise en contact intime entre plusieurs phases distinctes, et cette mise en contact pose en pratique de nombreux problèmes ; par exemple, dans le secteur agroalimentaire, les difficultés rencontrées en pratique sont les suivantes :

En premier lieu, les produits ont souvent une masse volumique très proche de la masse volumique du ou des liquides utilisés et présentent, parfois, une forme aplatie qui les prédispose à la flottation dans la phase liquide : il s'ensuit une mise en contact très imparfaite de la phase liquide et de la phase solide, puisque ces phases ont une forte tendance à une immobilité relative.

De plus, les particules de la phase solide ont parfois un caractère collant qui les prédispose à l'agglomération et entrave la pénétration du liquide dans la phase solide.

En outre, il convient en général d'utiliser un volume de liquide aussi faible que possible, (notamment pour réduire la dissolution dans la phase liquide des substances à conserver de la phase solide, ou pour extraire les solutés au moyen d'une quantité minimale de solvant en vue de faciliter leur récupération ultérieure à partir dudit solvant) ; cette contrainte accroît l'imperfection des conditions de mise en contact précédemment évoquées.

En dernier lieu, il est souvent essentiel d'apporter au moyen d'une phase gazeuse un élément chimique nécessaire au bon déroulement d'une réaction, par exemple de l'oxygène pour une réaction biochimique aérobie (fermentation, ...) ; dans les procédés classiques, le contact intime entre cette phase gazeuse et les autres phases est très difficile à obtenir ; par ailleurs, cette phase gazeuse, en se fixant souvent sous forme de microbulles au niveau des interfaces solide-liquide, tend à accentuer les risques de flottation en surface de la phase solide.

Par ailleurs, on a décrit des techniques consistant à mettre en contact un gaz et un solide avec des traces de liquide, soit adsorbé sur les particules solides, soit à l'état dispersé dans la phase gazeuse. Mais ces procédés ne permettent en aucun cas de réaliser une mise en contact intime de trois phases, solide, gazeuse, liquide, dans lesquelles la phase liquide est continue, sous forme de masse liquide.

C'est ainsi que dans le brevet français n° 2 371 227, on a proposé un procédé de mise en contact de deux phases, gazeuse et solide, avec possibilité d'avoir des traces de liquide associé à la phase solide, en vue d'obtenir le séchage de cette dernière. De façon analogue, dans les brevets DE 1 205 497 et US 3 241 520, on a proposé une technique d'enrobage de particules solides au moyen d'une pellicule liquide, qui consiste à pulvériser le liquide à la base d'une colonne à jet.

La présente invention se propose d'indiquer un nouveau procédé de mise en contact, permettant de remédier aux difficultés évoquées précédemment.

Un objectif de l'invention est en particulier de permettre une mise en contact intime d'au moins trois phases distinctes aux fins d'obtenir un ou des transferts, ou une ou des réactions, entre ces phases.

Un autre objectif est de permettre une mise en contact intime d'une phase gazeuse et d'au moins une phase solide, en présence d'une phase liquide continue ayant pour fonction essentielle d'assurer la sustentation des particules de la ou des phases solides, lesquelles ne sont pas limitées supérieurement en granulométrie.

Un autre objectif est de permettre une mise en contact intime d'au moins une phase solide et d'au moins une phase liquide continue, en présence d'une phase gazeuse ayant pour fonction essentielle d'assurer la mise en mouvement relatif des autres phases.

Un autre objectif est de permettre une mise en contact intime d'une phase gazeuse et d'au moins une phase liquide continue, en présence d'une phase solide inerte ayant pour fonction essentielle d'assurer une bonne dispersion des phases fluides.

Un autre objectif est de permettre une mise en contact intime d'au moins deux phases liquides, en présence d'une phase solide ayant pour fonction essentielle d'assurer une bonne dispersion des phases liquides, et d'une phase gazeuse ayant pour fonction d'assurer la mise en mouvement des autres phases.

A cet effet, le procédé de mise en contact conforme à l'invention s'appliquant à une phase gazeuse, à au moins une phase liquide et à au moins une phase solide se présentant sous la forme d'au moins un produit solide à l'état divisé, consiste à utiliser au moins une cellule pourvue, d'une part, d'au moins un déflecteur adapté pour imposer à la phase solide un mouvement global de circulation autour d'un axe approximativement horizontal, d'autre part, d'un distributeur situé à la base de ladite cellule, et adapté pour distribuer la phase gazeuse vers cette dernière, et retenir la phase liquide dans celle-ci, à alimenter la cellule en produit solide de façon que celui-ci recouvre au repos entièrement le distributeur, à alimenter la cellule en phase liquide de façon à former une couche dans laquelle, au repos, le liquide recouvre sensiblement tout le produit solide, et à alimenter la cellule en phase gazeuse à travers le distributeur de façon à engendrer dans ladite cellule un régime pulsatoire périodique composé d'une succession d'étapes de détentes de la phase gazeuse s'accompagnant de mouvements ascendants de la phase solide au-dessus du distributeur, et d'étapes de rétractions de la couche au cours de chacune desquelles la phase solide tend à revenir vers un état de lit fixe.

Un mode de mise en œuvre préféré du procédé conforme à l'invention consiste :

— à alimenter la cellule en un produit solide ayant une masse volumique comprise entre la masse volumique de la phase liquide et une valeur limite de l'ordre de 1,4 fois cette masse volumique, le volume $V_S$ de produit solide étant tel que ledit produit solide au repos dans la cellule recouvre entièrement le distributeur sur une hauteur au moins équivalente à deux couches de particules dudit produit et s'élève à une hauteur au plus égale à approximativement deux fois la hauteur du déflecteur,

— à alimenter la cellule en phase liquide de sorte que le volume de liquide $V_l$ présent dans ladite cellule recouvre sensiblement le produit solide au repos et soit au plus égal à 5 fois le volume $V_S$ dudit produit solide,

— à alimenter la cellule en phase gazeuse à travers le distributeur à un débit tel que la vitesse moyenne U du gaz dans la cellule au niveau de sa section la plus étroite soit, d'une part, au moins égale à une valeur critique $U_C$, valeur limite entre un régime d'écoulement continu de la phase gazeuse sous forme de microbulles au travers de la couche de produit solide, et un régime d'accumulation à la base de cette couche, d'autre part, au plus égale à une valeur maximale $U_E$ au-delà de laquelle le liquide se trouve rapidement entraîné par la phase gazeuse sous forme de gouttelettes par voie pneumatique.

En outre, on utilise de préférence des cellules formées chacune par un conduit pourvu à sa base d'un distributeur de section $\sigma$ et d'au moins un déflecteur constitué par une paroi latérale inclinée partant du niveau du distributeur et formant un angle obtus avec celui-ci, de sorte que la section du conduit croisse d'une section minimale s au niveau du distributeur à une section maximale S, telles que $s \geqslant \sigma$ et $0,15 \leqslant s/S \leqslant 0,75$.

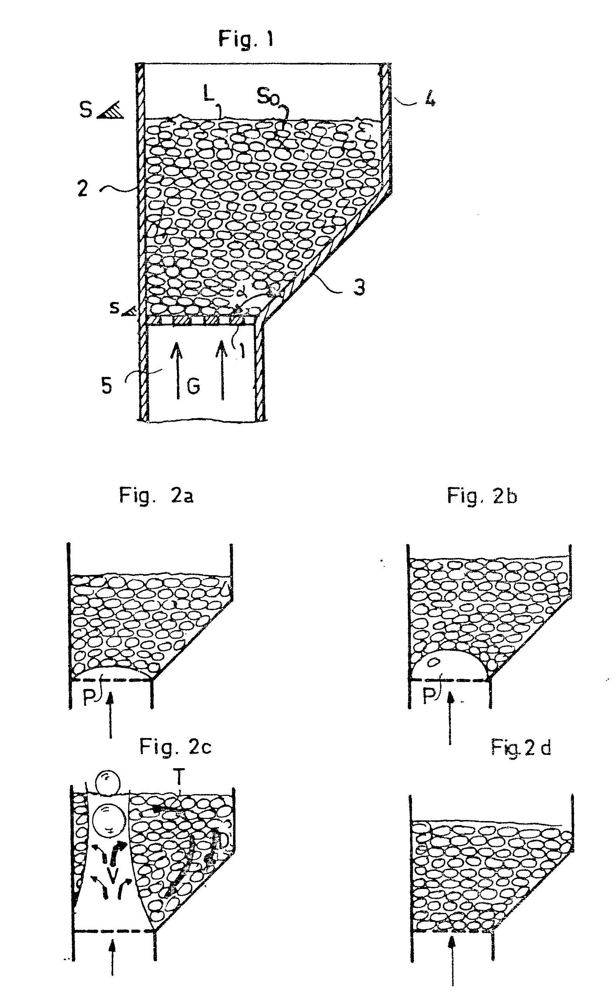

En vue de faciliter la compréhension du procédé ci-dessus défini, on a schématisé en coupe transversale à la figure 1 une cellule de base, et aux figures 2a, 2b, 2c, 2d les diverses étapes constituant une période de fonctionnement. On retrouve à la figure 1 le distributeur 1 au-dessous duquel arrive le débit de gaz G par un conduit 5, le conduit 2 de section s au niveau du distributeur et de section maximale S en partie haute, la paroi inclinée 3, les particules solides $S_o$ et la phase liquide interstitielle L.

Lorsque le procédé est mis en œuvre dans les conditions définies plus haut, on observe dans la cellule un régime pulsatoire, illustré aux figures 2a, 2b, 2c, 2d.

Dans une première étape (fig. 2a), une poche de gaz P se crée immédiatement au-dessus du distributeur sous la voûte formée par les particules du produit solide en suspension dans la phase liquide.

Cette poche provient d'une accumulation de gaz, conséquente, d'une part, à la vitesse U du gaz au-dessus de la grille supérieure à la vitesse critique $U_C$ de simple écoulement continu, d'autre part, à la forte concentration du produit solide provenant des conditions relatives d'alimentation de la cellule en phase solide et en phase liquide.

La poche P grossit rapidement (fig. 2b) jusqu'à exploser lorsque la poussée du gaz retenu sous la voûte devient supérieure au poids de celle-ci.

Le gaz est alors libéré sous forme de grosses bulles s'élevant dans une cheminée au-dessus du distributeur (fig. 2c) ; il y a transmission de quantités de mouvements entre les phases tout au long du trajet ascensionnel du gaz : on observe un entraînement du liquide et des particules solides, d'abord dans le sens vertical ascendant V, puis dans le sens transversal T vers la paroi inclinée, ensuite dans le sens descendant D le long de cette paroi (dans la zone au-dessus de celle-ci qui n'est pas alimentée en gaz).

A ce mouvement de circulation globale et régulière, se superposent d'innombrables phénomènes locaux et aléatoires de déplacements relatifs de trois phases, déplacements de très faibles amplitudes imputables à l'inertie différente des phases en présence ; la fréquence de ces déplacements locaux et aléatoires et la fréquence de formation des poches sont du même ordre de grandeur, et au moins égales à quelques hertz. La combinaison de cette circulation globale et de ces déplacements locaux entraîne, d'une part, une remarquable mise en contact des trois phases, liée à la haute fréquence des déplacements locaux impliquant des renouvellements intenses au niveau des interfaces de contact, d'autre part, une homogénéité de traitement due à la circulation globale qui assure une égalité de traitement des particules élémentaires des phases.

Les diverses conditions opératoires du procédé ont été définies expérimentalement et ne doivent pas être interprétées de façon rigoureuse.

La plage préconisée pour le rapport des sections s/S est définie de façon à autoriser une circulation d'ensemble satisfaisante des phases solide et liquide.

La plage de masse volumique préconisée pour le produit solide est définie pour permettre, à la fois, les mouvements ascendants du solide immergé dans la phase liquide, et ses mouvements descendants, qui sont à l'origine de la circulation d'ensemble sus-évoquée.

La plage des volumes de produit solide disposés dans la cellule est fixée pour permettre la formation de la poche de gaz P grâce à l'apparition d'un effet de voûte, tout en évitant un excédent de produit solide qui conditionnerait une division et une répartition des bulles de gaz dans la partie haute de la cellule et freinerait le mouvement descendant du produit solide.

La plage des volumes de liquide est fixée pour permettre une mise en suspension effective de toutes les particules solides, tout en évitant une trop grande dispersion de ces particules au sein de la phase liquide, dispersion préjudiciable à la formation et au développement de la poche P.

Pour ce qui concerne la vitesse de distribution de la phase gazeuse, les expérimentations ont montré que si cette vitesse était inférieure à une valeur critique $U_C$, le gaz diffusait de façon continue entre les particules solides, et ne s'accumulait pas pour former la poche P. Au contraire, au-delà de cette valeur critique définie expérimentalement dans chaque cas d'espèce, la poche peut se former par accumulation d'au moins une partie du gaz.

Les observations ont démontré que cette valeur critique $U_C$ est fonction des propriétés physiques de la phase liquide (tension superficielle, viscosité), de la forme des particules solides, des masses volumiques relatives de la phase liquide et de la phase solide, et des caractéristiques géométriques de la cellule ainsi que de ses conditions de remplissage en produits solides et en phase liquide.

La vitesse maximale $U_E$ de gaz à ne pas dépasser est fixée par les conditions d'entraînement pneumatique de la phase liquide, qui entraînerait une modification très rapide des conditions de remplissage de la cellule.

Par ailleurs, selon une condition opératoire préférentielle du procédé, on utilise un distributeur de section σ égale à la section minimale s du conduit au niveau dudit distributeur, comme l'illustre la figure 1. Cette disposition réduit les risques de formation de zones mortes à la base de la cellule.

En outre, on peut avantageusement utiliser une cellule dans laquelle la paroi latérale inclinée forme avec le distributeur un angle α approximativement compris entre 120° et 150°, et en particulier voisin de 135°, et dans laquelle le rapport des sections s/S est très approximativement de l'ordre de 0,5. Cette géométrie s'est avérée expérimentalement particulièrement favorable à l'établissement d'une circulation d'ensemble régulière sans zone morte et au développement de déplacements locaux très intenses des phases les unes par rapport aux autres.

De préférence, le procédé est mis en œuvre avec un ou des produits solides de granulométrie moyenne supérieure à 1 mm environ ; les forces d'Archimède et de pesanteur s'exerçant sur chaque particule solide sont ainsi prépondérantes par rapport aux forces de surface s'exerçant sur les particules solides (forces liées à la tension superficielle, à la viscosité et aux frottements solide/solide), forces de surface qui ont tendance à freiner les déplacements locaux sus-évoqués.

De plus, on utilise avantageusement une cellule dont les dimensions suivant les deux axes au niveau de la section s sont chacune au moins égale à dix fois la granulométrie moyenne du produit divisé. On facilite ainsi la formation de la voûte de produit solide, et par voie de conséquence, de la poche de gaz au-dessous de celle-ci.

Le procédé de l'invention peut être mis en œuvre de façon discontinue ou de façon continue.

Dans le premier cas, les phases liquide et solide sont disposées en totalité dans la cellule en début d'opération et prélevées en totalité en fin d'opération.

Dans le second cas, l'une au moins des phases liquide ou solide est alimentée en injectant en continu ladite phase dans la cellule à faible débit au-dessus de la paroi inclinée, cette phase étant prélevée à débit égal dans une zone de la cellule, opposée à la zone d'alimentation. Par faible débit, il faut entendre un débit conférant à la vitesse d'arrivée ou de soutirage de la phase, une faible valeur par rapport à la vitesse moyenne de circulation des produits dans la cellule, de façon à ne pas perturber notablement cette circulation.

L'alimentation de la cellule en phase gazeuse peut être continue, à débit fixe ou variable ; elle peut également être intermittente, composée de périodes d'alimentation en gaz, et de périodes d'arrêt de l'alimentation.

Le procédé peut être mis en œuvre avec une seule cellule ou avec plusieurs cellules combinées.

La description qui suit, en référence aux dessins annexés, présente, à titre non limitatif, des modes de réalisation d'appareillage ainsi qu'un exemple de mise en œuvre en vue d'illustrer le procédé conforme à l'invention ; sur ces dessins, qui font partie intégrante de la description :

la figure 1, déjà commentée, est une coupe verticale d'une cellule,

les figures 2a, 2b, 2c, 2d, déjà commentées, sont des schémas explicatifs du principe de fonctionnement,

la figure 3 est un schéma en coupe verticale d'une combinaison de cellules conformes à l'invention,

la figure 4 présente des courbes concernant l'exemple de mise en œuvre.

La cellule déjà décrite qui est représentée à la figure 1 peut être cylindrique ou prismatique.

La paroi inclinée 3 peut être ou non surmontée par une paroi ascendante 4, notamment verticale. Bien entendu, la paroi inclinée 3 peut être plane ou non, et faire partie du conduit 2 ou être rapportée dans ou sur celui-ci (sabot, chicane...).

Le distributeur 1 est de tout type connu, apte à éviter une descente du liquide L dans le conduit d'amenée de la phase gazeuse 5 (plaque frittée, grille, plaque perforée, ...).

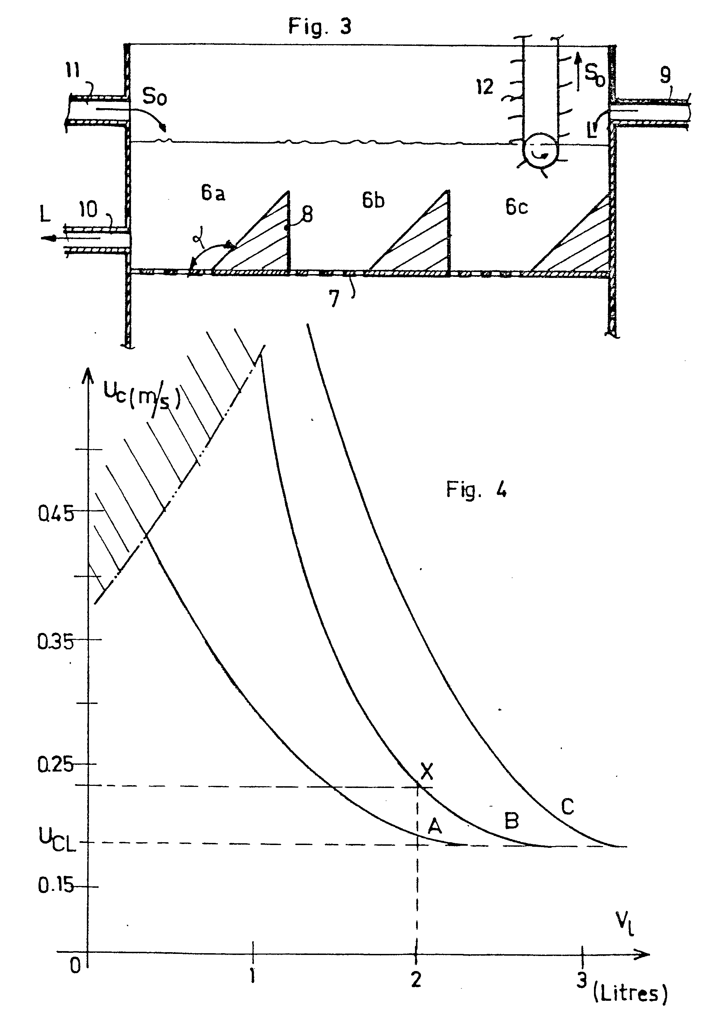

Le dispositif représenté à la figure 3 est destiné à illustrer le procédé de l'invention dans le cas de plusieurs cellules telles que 6a, 6b, 6c du type sus-évoqué ; ces cellules sont juxtaposées les unes contre les autres, et alimentées en parallèle en phase gazeuse à travers leurs distributeurs. Ces derniers sont formés par une grille 7 qui sert à soutenir les sabots tels que 8, formant la paroi inclinée de chaque cellule.

En l'exemple, pour chaque cellule, le rapport s/S est égal à 0,5 et l'angle $\alpha$ entre sa paroi inclinée et le distributeur est égal à 135°.

Le dispositif représenté à la figure 3 peut notamment servir à opérer en continu une extraction liquide/solide à contre-courant. A cet effet, un conduit d'injection de liquide 9 est prévu dans une des cellules extrêmes au-dessus du niveau du liquide, et un conduit de prélèvement de liquide 10 est prévu dans l'autre cellule extrême, à l'opposé du conduit d'injection. De plus, des moyens d'alimentation continue 11 de la phase solide sont prévus au-dessus de la cellule extrême où est prélevé le liquide, cependant qu'un système de prélèvement du solide symbolisé en 12 est prévu dans l'autre cellule extrême, en une zone proche du conduit d'injection 9. Le système de prélèvement 12 de type classique peut être un système mécanique à auges perforées mobiles ou tout autre système connu permettant de prélever des particules solides immergées dans un milieu liquide.

En cours de fonctionnement, le niveau de la phase liquide est situé au-dessus de l'extrémité supérieure des sabots 8, de façon à permettre un cheminement d'une cellule à l'autre, aussi bien de la phase liquide (sens 6c → 6a) que de la phase solide (sens 6a → 6c).

La phase gazeuse, en particulier de l'air (inerte à l'égard des autres phases) sert à assurer au niveau de chaque cellule les conditions de mélange et de mise en contact intime déjà décrites, qui permettent de considérer chacune de ces cellules comme un mélangeur parfait.

Au niveau de chaque cellule, le contact intime des phases liquide et solide que permet le procédé, conditionne une extraction efficace des solutés contenus dans les particules solides, par la phase liquide, laquelle consiste en cet exemple en un solvant de nature appropriée.

Un exemple de mise en œuvre du procédé de l'invention va être décrit en détail ci-après, et diverses applications possibles seront indiquées de façon générale.

Exemple relatif à une mise en contact de produits solides en milieu aqueux

Cet exemple a été conduit de façon discontinue dans une cellule cylindrique du type de celle schématisée à la figure 1, ayant les caractéristiques géométriques suivantes :
— angle d'inclinaison $\alpha = 135°$

— s = 57 cm²
— S = 290 cm²
— s/S ≃ 0,2

Les produits solides sont constitués par de grosses particules se présentant sous la forme d'ellipsoïdes aplatis, ayant un grand axe de 2 cm environ, un petit axe de 1 cm environ et une épaisseur de 0,5 cm environ. La granulométrie moyenne de ces produits, définie comme le diamètre moyen d'une sphère de même volume, est de 1 cm. La densité de ce produit est de 1,1 environ.

La phase liquide est constituée par de l'eau, et la phase gazeuse par de l'air.

Les conditions de remplissage de la cellule ont été amenées à varier au cours de plusieurs essais, afin de repérer les vitesses critiques correspondantes $U_c$.

Les courbes A, B, C de la figure 4 correspondent à un fonctionnement avec des quantités de produits solides respectivement égales à 550 g, 1 100 g, 1 650 g. En abcisse sont portés les volumes en litres d'eau dans la cellule et en ordonnée, les vitesses critiques $U_c$ correspondantes.

Par exemple, des conditions de remplissage correspondant à 1 100 g de produits solides et à 2 litres d'eau (point X de la courbe B) ont fourni une vitesse critique $U_c$ de 0,23 m/s environ. En dessous de cette vitesse, l'air diffuse lentement à travers la couche de produits solides et ne s'accumule pas pour former une poche. A partir de cette vitesse, le phénomène pulsatoire caractéristique de l'invention apparaît avec ses conséquences recherchées.

Les essais ci-dessus indiqués ont été effectués en tenant compte des autres contraintes du procédé, à savoir :

— le volume de liquide est prévu pour recouvrir entièrement la couche de produits solides au repos (non irrigué par la phase gazeuse), ce qui, dans cet exemple, se traduit par la condition $V_l/V_s \geqslant 1$ (la zone de non-fonctionnement a été hachurée à la figure 4).

— le volume de liquide est prévu de sorte que le rapport $V_l/V_s$ reste inférieur à 5 pour chacune des courbes.

On constate dans l'exemple ci-dessus que, lorsque le volume $V_l$ de liquide croît, les courbes A, B, C tendent vers une limite $U_{CL}$ de la valeur critique, de l'ordre de 0,18 m/s. Dans tous les cas de remplissage, la vitesse du gaz doit être supérieure à cette valeur pour cette application.

Lorsque les conditions du procédé sont respectées, on obtient une mise en suspension effective de chaque particule solide dans le milieu liquide aéré, avec un traitement homogène de celles-ci, sans accumulation en surface ; de plus, on n'observe aucun collage des particules solides, malgré leur propension naturelle à se coller.

Au contraire, dans les lits fluidisés traditionnels à 3 phases, constitués avec des produits de ce type, il apparaît toujours en surface du lit une sorte de gâteau de particules solides agglomérées qui fait obstacle au bon déroulement du traitement, par exemple d'une réaction de fermentation.

En outre, dans le procédé de l'invention, les particules solides sont intactes en fin d'opération, et ne présentent aucune blessure en surface, contrairement au cas d'un fermenteur classique à agitateur mécanique.

Le procédé de mise en contact de l'invention possède de multiples applications.

Il peut être mis en œuvre pour réaliser une réaction biochimique faisant intervenir au moins deux phases, comme c'est le cas dans l'exemple dont les conditions hydrodynamiques ont été ci-dessus décrites ; c'est également le cas de fermentations, par exemple de composts ménagers ou de fermentations liquides.

Il peut également être mis en œuvre pour réaliser des transferts de matière entre au moins deux phases :

— extraction de substances colorantes, aromatiques ou autres par solvants à partir d'une phase solide ou liquide,

— adsorption de substances colorantes, aromatiques, ou autres sur des particules solides,

— absorption de substances initialement présentes en phase gazeuse dans une phase liquide.

Dans ces applications, les phases peuvent avoir simultanément un rôle dans le mécanisme de transfert et dans le mécanisme de mise en contact ou avoir pour seule fonction de permettre la mise en contact des autres phases, conformément au procédé de l'invention.

## Revendications

1. Procédé de mise en contact d'au moins trois phases, dans lequel une phase est une phase gazeuse, une phase au moins est une phase liquide, et une phase au moins est une phase solide se présentant sous la forme d'au moins un produit solide à l'état divisé, ledit procédé utilisant au moins une cellule pourvue, d'une part, d'au moins un déflecteur adapté pour imposer à la phase solide un mouvement global de circulation autour d'un axe approximativement horizontal, d'autre part, d'un distributeur situé à la base de ladite cellule et adapté pour distribuer la phase gazeuse vers cette dernière, ledit procédé étant caractérisé en ce qu'il consiste à utiliser une cellule dont le distributeur est adapté pour retenir la phase liquide dans la cellule, à alimenter la cellule en produit solide de façon que celui-ci recouvre au repos entièrement ledit distributeur, à alimenter la cellule en phase liquide de façon à former une couche dans laquelle, au repos, le liquide recouvre sensiblement tout le produit solide, et à alimenter la cellule en phase gazeuse à travers le distributeur de façon à engendrer dans ladite cellule un régime pulsatoire périodique composé d'une succession d'étapes de détentes de la phase gazeuse s'accompagnant de mouvements ascendants de la phase solide au-dessus du distributeur, et d'étapes de rétractions de la couche, au cours de chacune desquelles la phase solide tend à revenir vers un état de lit fixe.

2. Procédé de mise en contact d'au moins trois phases, selon la revendication 1, caractérisé en ce qu'il consiste :

— à utiliser au moins une cellule pourvue à sa base d'un distributeur adapté pour distribuer la phase gazeuse vers ladite cellule et retenir la phase liquide dans celle-ci, ladite cellule étant formée par un conduit pourvu d'au moins un déflecteur adapté pour imposer à la phase solide un mouvement global de circulation autour d'un axe approximativement horizontal,

— à alimenter la cellule en produit solide ayant une masse volumique comprise entre la masse volumique de la phase liquide et une valeur limite de l'ordre de 1,4 fois cette masse volumique, le volume $V_S$ de produit solide étant tel que ledit produit solide au repos dans la cellule recouvre entièrement le distributeur sur une hauteur au moins équivalente à deux couches de particules dudit produit et s'élève à une hauteur au plus égale à approximativement deux fois la hauteur du déflecteur,

— à alimenter la cellule en phase liquide, de sorte que le volume de liquide $V_l$ présent dans ladite cellule recouvre sensiblement le produit solide au repos et soit au plus égal à 5 fois le volume $V_s$ dudit produit solide,

— à alimenter la cellule en phase gazeuse à travers le distributeur à un débit tel que la vitesse moyenne U du gaz dans le conduit au niveau de sa section la plus étroite soit, d'une part, au moins égale à une valeur critique $U_c$, valeur limite entre un régime d'écoulement continu de la phase gazeuse sous forme de microbulles au travers de la couche de produit solide, et un régime d'accumulation à la base de cette couche, d'autre part, au plus égale à une valeur maximale $U_E$ au-delà de laquelle le liquide se trouve entraîné par la phase gazeuse sous forme de gouttelettes, par voie pneumatique.

3. Procédé selon l'une des revendications 1 ou 2, caractérisé en ce qu'on utilise des cellules formées chacune par un conduit pourvu à sa base d'un distributeur de section σ et d'au moins un déflecteur constitué par une paroi latérale inclinée partant du niveau du distributeur et formant un angle obtus avec celui-ci, de sorte que la section du conduit croisse d'une section minimale s au niveau du distributeur à une section maximale S, telles que s ≥ σ et 0,15 ≤ s/S ≤ 0,75.

4. Procédé selon la revendication 3, caractérisé en ce que l'on utilise un distributeur de section σ égale à la section minimale s du conduit au niveau dudit distributeur.

5. Procédé selon l'une des revendications 3 ou 4, caractérisé en ce que l'on utilise une cellule comprenant une paroi latérale inclinée, formant avec le distributeur un angle approximativement compris entre 120° et 150°.

6. Procédé selon l'une des revendications 3, 4 ou 5, caractérisé en ce que l'on utilise une cellule telle que le rapport s/S soit très approximativement de l'ordre de 0,5.

7. Procédé selon l'une des revendications 1, 2, 3, 4, 5 ou 6, caractérisé en ce que l'on alimente la cellule en un produit solide de granulométrie moyenne supérieure à 1 mm environ.

8. Procédé selon l'une des revendications 3, 4, 5, 6 ou 7, caractérisé en ce que l'on utilise une cellule dont les dimensions suivant les deux axes au niveau de la section s sont chacune au moins égale à dix fois la granulométrie moyenne du produit divisé.

9. Procédé selon l'une des revendications 1, 2, 3, 4, 5, 6, 7 ou 8, mis en œuvre de façon discontinue, les phases liquide et solide étant disposées en totalité dans la cellule, en début d'opération, et prélevées en totalité en fin d'opération.

10. Procédé selon l'une des revendications 1, 2, 3, 4, 5, 6, 7 ou 8, mis en œuvre de façon continue pour au moins l'une des phases liquide ou solide, la ou lesdites phases liquide ou solide étant alimentées en injectant en continu ladite phase dans la cellule à faible débit au-dessus de la paroi inclinée, et étant prélevées à débit égal dans une zone de la cellule, opposée à la zone d'alimentation.

11. Procédé selon l'une des revendications 1, 2, 3, 4, 5, 6, 7, 8, 9 ou 10, caractérisé en ce que l'alimentation de la cellule en phase gazeuse est intermittente.

12. Procédé selon l'une des revendications 1, 2, 3, 4, 5, 6, 7, 8, 9, 10 ou 11, dans lequel l'on utilise plusieurs cellules, juxtaposées les unes contre les autres, et alimentées en parallèle en phase gazeuse à travers le distributeur.

13. Procédé selon l'une des revendications 1, 2, 3, 4, 5, 6, 7, 8, 9, 10, 11 ou 12, caractérisé en ce qu'il est mis en œuvre pour réaliser un transfert de matière entre au moins deux phases.

14. Procédé selon l'une des revendications 1, 2, 3, 4, 5, 6, 7, 8, 9, 10, 11 ou 12, caractérisé en ce qu'il est mis en œuvre pour réaliser une réaction biochimique faisant intervenir au moins deux phases.

**Claims**

1. Process for contacting together at least three phases in which one phase is a gaseous phase, at least one phase is a liquid phase and at least one phase is a solid phase in the form of divided solid product, said process using at least one cell comprising, on the one hand, at least one deflector adapted to force the solid phase to move around an approximatively horizontal axis, on the other hand, a distributor located at the bottom of said cell and adapted to distribute the gaseous phase into said cell, said process being characterized in that it consist to use a cell, the distributor of which is adapted to hold the liquid phase in the cell, to feed the cell with solid product so as to wholy cover the distributor in stillstand, to feed the cell with liquid phase so as to about wholy cover the solid product in stillstand and to feed the cell with gaseous phase through the distributor so as to create in said cell a pulsatory recurring rate of expansion steps for the gaseous phase together with an upward motion of solid phase above the distributor and of retraction steps in which the solid phase is inclined to fall down back in a bedstand.

2. Process for contacting together at least three phases as set forth in claim 1, characterized in that it consists :

— to use at least one cell provided with a distributor located at the bottom of said cell and adapted to distribute the gaseous phase into said cell and to hold it, said cell being in form of a pipe provided with a deflector adapted to force the solid phase to move around an approximatively horizontal axis,

— to feed the cell with solid product having a volumetric mass comprised between the volumic mass of the liquid phase and a limit value of 1,4 times this volumic mass, the volume $V_s$ of the solid product being so that it wholy covers the distributor in stillstand with at least two layers of particles of said product and reaches a height at most approximatively twice the height of the deflector,

— to feed the cell with liquid phase so as the volume $V_l$ of liquid product in the cell approximatively covers the solid product in stillstand and is at most five time the volume $V_s$ of solid product,

— and to feed the cell with gaseous phase through the distributor with such a flow rate that the middle speed U of the gas in the narrowest part of the pipe is, on the one hand, at least equal to a critical value $U_C$ corresponding to a limit between a continous flow of microbubles of gaseous phase through the layer of solid product and an accumulation of the gaseous phase at the bottom of the layer, on the other hand, at most equal to a maximal value $U_E$ above which the liquid product is pneumatic borne along by the gaseous phase in the form of droplets.

3. Process as set forth in claim 1 or 2, characterized by using cells, each being formed by a pipe provided at the bottom with a distributor the section of which is $\sigma$ and with at least a reflector constitued by an inclined lateral wand from the distributor level and doing with it an obtuse angle so that the section of the pipe increases from an initial value s at the level of the distributor to a maximal value S so that $s \geqslant \sigma$ and $0,15 \leqslant s/S \leqslant 0,75$.

4. Process as set forth in claim 3, characterized by using a distributor the section $\sigma$ of which is equal to the minimal value s of the pipe at the distributor level.

5. Process as set forth in claim 3 or 4, characterized by using a cell the lateral inclined wand of which does an angle with the distributor, said angle being approximatively comprised between 120° and 150°.

6. Process as set forth in claim 3, 4 or 5, characterized by using a cell in which the ratio s/S is about 0,5.

7. Process as set forth in claim 1, 2, 3, 4, 5 or 6, characterized by feeding the cell with solid product of middle granulometry above about 1 mm.

8. Process as set forth in claim 3, 4, 5, 6 or 7, characterized by using a cell the dimensions of which along the two axis at the s section level are each at least equal to ten times the middle granulometry of divided product.

9. Process as set forth in claim 1, 2, 3, 4, 5, 6, 7 or 8, working in a discontinuous way, in which the liquid and gaseous phases are fully laid in the cell at the beginning of the operation and fully drawn out at the end of the operation.

10. Process as set forth in claim 1, 2, 3, 4, 5, 6, 7 or 8, working in a continuous way for at least one of the liquid and gaseous phases, in which one or more of the liquid or gaseous phases are continuously injected with a low flow rate above the inclined wand of the cell and are continuously drawn out with the same flow rate in a part of the cell opposite to the feeding part.

11. Process as set forth in claim 1, 2, 3, 4, 5, 6, 7, 8, 9 or 10, characterized by an intermittent feeding of the cell with gaseous phase.

12. Process as set forth in claim 1, 2, 3, 4, 5, 6, 7, 8, 9, 10 or 11, in which several cells are used, side by side and fed in parallel with gaseous phase through the distributor.

13. Process as set forth in claim 1, 2, 3, 4, 5, 6, 7, 8, 9, 10, 11 or 12, characterized in that it is used to transfer substance between at least two phases.

14. Process as set forth in claim 1, 2, 3, 4, 5, 6, 7, 8, 9, 10, 11 or 12, characterized in that it is used to do a biochemical reaction between at least two phases.

## Ansprüche

1. Verfahren um mindestens drei Phasen in Kontakt zu bringen, unter denen eine eine Gasphase ist, mindestens eine zweite eine flüssige Phase ist und mindestens eine dritte eine feste Phase ist, die die Gestalt eines festen Produkts im geteilten Zustand annimmt, das besagte Verfahren bestehend darin, mindestens eine Zelle zu benutzen, die erstens mit mindestens einem so angepassten Deflektor, dass der festen Phase einen gobalen Kreislauf um eine etwa horizontale Achse aufzwingt, zweitens mit einem auf der Basis der vorgennanten Zelle eingestellten Verteiler, der dazu angepasst ist, die Gasphase zur Zelle zu verteilen, das besagte Verfahren ist dadurch gekennzeichnet, dass man eine Zelle anwendet, derer Verteiler die flüssige Phase in der Zelle festhalten kann, man versorgt die Zelle mit festem Produkt, so dass das in Ruhelage angelangene Produkt den Verteiler verdeckt, man versorgt die Zelle mit flüssigem Phase, so dass in Ruhelage der feste Phase bedeckt ist, und man versorgt die Zelle mit Gasphase durch den Verteiler, so dass, in der Zelle eine periodische Pulsierungszahl erfolgt, die aus einer Reihe von Expansionsstufen der Gasphase, von aufsteigenden Bewegungen der festen Phase über den Verteiler und von Schrumpfstufen der Schicht besteht, während deren die feste Phase dazu neigt, zu einem festen Bettzustand.

2. Verfahrend um mindestens drei Phasen im Kontakt zu bringen nach Anspruch 1, dadurch gekennzeichnet, dass es im folgenden besteht :
— die Benutzung mindestens eine Zelle, auf derer Basis ein Verteiler angepasst ist, um die Gasphase zur vorgenannten Zelle zu verteilen und die flüssige Phase in dieser festzuhalten, da die besagte Zelle aus einer mit mindestens einem angepassten Deflektor versehenen Leitung besteht, welcher Deflektor der festen Phase einen globalen Kreislauf um eine etwa horizontale Achse aufzwingen muss :
— die Versorgung der Zelle mit festem Produkt dessen Volumgewicht zwischen dem Volumgewicht der flüssigen Phase und einem Grenzwert um etwa 1,4 mal dieses Volumgewicht steht, so dass das dem festen Produkt entsprechende Volum $V_S$ so ausgewählt ist dass das feste Produkt im Ruhezustand in der Zelle den verteiler um eine Höhe verdeckt, die mindestens zwei Partikelschichten des vorgenannten Produkts gleichkommt und steigt höchstens bis zum etwa zweimal die Höhe des Deflektors,
— die Versorgung der Zelle mit der Flüssigphase, so dass das Flüssigkeitvolum $V_l$ in der vorgenannten Zelle das feste Produkt im Ruhestand merklicherweise bedeckt und höchstens fünf mal das Volum $V_s$ des festen Produkts beträgt,
— die Versorgung der Zelle mit der Gasphase durch den Verteiler zu einer so bestimmten Abflussmenge, dass die Durchschnittsgasgeschwindigkeit U in der engsten Sektion der Leitung ist einerseits mindestens identisch mit dem kritischen Wert $U_C$, Grenzwert zwischen einer Gleichabflussmenge der Gasphase in der Form von Mikroblasen durch die Schicht des festen Produkts und einer Speichermenge auf der Basis dieser Schicht, anderseits höchstens identisch mit einem maximalen Wert $U_E$ über diejenige die Flüssigkeit mit der Gasphase in der Form von Tröfchen durch Luftvorrichtung abgeleitet.

3. Verfahren nach einem der Ansprüche 1 oder 2 dadurch gekennzeichnet, dass Zellen benutzt werden, die alle aus einer Leitung bestehen, deren Basis mit einem Verteiler welcher Profil ist, und mindestens einem Deflektor versehen ist, der aus einer schrägen Seitenwand vom Verteiler besteht, die einem stumfen Winkel mit dem Verteiler bildet, so dass das Leitungsprofil des Verteilers von einem minimalen Profil s bis zu einem maximalen Profil S vergrössert wird, solche wie s und 0,15 s/S 0,75.

4. Verfahren nach Anspruch 3, dadurch gekennzeichnet, dass ein Verteiler benutzt wird, dessen Profil identisch mit dem minimalen Profil s der Verteilerleitung ist.

5. Verfahren nach einem der Ansprüche 3 oder 4, dadurch gekennzeichnet, dass eine Zelle benutzt wird, die aus einer schrägen Seitenwand besteht, jene bildet mit dem Verteiler einen Winkel von ungefähr 120° bis 150°.

6. Verfahren nach einem der Ansprüche 3, 4 oder 5 dadurch gekennzeichnet, dass man eine Zelle braucht die ein Verhältnis s/S ungefähr 0,5 vorzeigt.

7. Verfahren nach einem der Ansprüche 1, 2, 3, 4, 5 oder 6 dadurch gekennzeichnet, dass die Zelle mit einem festen Produkt versorgt ist, dessen Durchschnittskörnung ungefähr höher als 1 mm ist.

8. Verfahren nach einem der Ansprüche 3, 4, 5, 6 oder 7 dadurch gekennzeichnet, dass eine Zelle benutzt ist, derer Masse den zwei Achsen des Profiles s entlang beide mindestens zehn mal der Durchschnittskörnung des geteilten Produktes gleich sind.

9. Verfahren nach einem der Ansprüche 1, 2, 3, 4, 5, 6, 7 oder 8, das unbeständig angewandt ist, da die Flüssigphase und die feste Phase sich im ganzen am Anfang der Prozedur in der Zelle befinden und am Ende der Prozedur ganz entnommen sind.

10. Verfahren nach einem der Ansprüche 1, 2, 3, 4, 5, 6, 7 oder 8, das beständig für mindestens eine der Flüssigphase oder festen Phase angewandt ist, da die vorbesagte oder vorbesagten Flüssig- oder feste Phasen durch die beständige Injektion der ensprechenden Phase in die Zelle langsam über die schräge Seitenwand versorgt werden und in gleicher Menge aus einer der Versorgungszone gegenüberstehende Zone der Zelle entnommen sind.

11. Verfahren nach einem der Ansprüche 1, 2, 3, 4, 5, 6, 7, 8, 9 oder 10 dadurch gekennzeichnet, dass die Versorgung der Zelle mit der Gasphase stossweise erfolgt.

12. Verfahren nach einem der Ansprüche 1, 2, 3, 4, 5, 6, 7, 8, 9, 10 oder 11 dadurch gekennzeichnet, dass mehrere nebeneinandergestellte Zellen benutzt sind und parallel mit der Gasphase durch den Verteiler versorgt sind.

13. Verfahren nach einem der Ansprüche 1, 2, 3, 4, 5, 6, 7, 8, 9, 10, 11 oder 12 dadurch gekennzeichnet, dass es angewandt ist, um eine Stoffüberleitung zwischenmindestens zwei Phasen vorzunehmen.

14. Verfahren nach einem der Ansprüche 1, 2, 3, 4, 5, 6, 7, 8, 9, 10, 11 oder 12 dadurch gekennzeichnet, dass es angewandt ist, um eine biochemische Reaktion zwischen mindestens zwei Phasen durchzuführen.

Fig. 1

Fig. 2a

Fig. 2b

Fig. 2c

Fig. 2 d

Fig. 3

Fig. 4